# FASCICULE DE BREVET EUROPEEN

(11) **EP 2 619 941 B1**
(45) Date de publication et mention de la délivrance du brevet: **12.12.2018**
(21) Numéro de dépôt: 12741035.5
(22) Date de dépôt: 28.06.2012
(51) Int. Cl.: H04L 9/32, H04L 29/06, H04W 12/06

(54) **PROCEDE, SERVEUR ET SYSTEME D'AUTHENTIFICATION D'UNE PERSONNE**
VERFAHREN, SERVER UND SYSTEM ZUR AUTHENTIFIZIERUNG EINER PERSON
METHOD, SERVER AND SYSTEM FOR AUTHENTICATION OF A PERSON

(30) Priorité: 05.08.2011 FR 1157182
(43) Date de publication de la demande: 31.07.2013
(73) Titulaire: ONEY BANK, 59170 Croix (FR)
(72) Inventeur: FERLIN, Benoît Charles Maurice Fernand, F-59320 Hallennes-lez-Habourdin (FR); RIZET, Alexis, F-71290 L'abergement De Cuisery (FR); ALEBOYEH, Peyman, F-93210 La Plaine Saint Denis (FR)
(74) Mandataire: Dejade & Biset
(86) Numéro de dépôt international: PCT/FR2012/051495
(87) Numéro de publication internationale: WO 2013/021107

(56) Documents cités:
- EP-A1- 1 840 814
- WO-A1-2007/072001
- WO-A2-2011/138558
- US-A1- 2003 172 272
- US-A1- 2008 086 764

## Description

La présente invention concerne un procédé, un serveur et un système d'authentification d'une personne titulaire d'un équipement de télécommunication ayant un identifiant unique.

Dans de nombreuses transactions électroniques, par exemple de paiement, il est important de garantir l'identité des intervenants et la transmission sécurisée d'informations confidentielles entre ceux-ci.

La première solution proposée, et à ce jour largement utilisée, consiste à chiffrer le canal de transmission par un protocole spécifique, typiquement SSL (« Secure Socket Layer » - couche de connexion sécurisée).

Cela permet de protéger d'une écoute sur le canal de transmission mais cela ne protège pas des attaques sur le poste de travail comme l'installation de logiciel espion ou d'attaque de type « Man in the Browser » (« Homme dans le navigateur »), c'est-à-dire d'intégration dans le navigateur internet d'un logiciel malveillant d'espionnage, ni d'attaque de type « Man in the Middle » (« Homme au milieu ») dans laquelle un tiers se fait passer pour un des intervenants et se met en coupure sur le canal de communication en imitant le comportement attendu de l'interlocuteur.

De nombreuses solutions ont été proposées pour protéger les utilisateurs de ce type d'attaque. En particulier, il a été proposé d'utiliser deux canaux de communication différents en faisant l'hypothèse qu'il est très difficile pour un tiers d'intercepter et de synchroniser des communications utilisant deux, ou plus, canaux et que de ce fait, les attaques « Man in the Middle » ne serait plus pratiquement possible.

Sur ce principe, une solution utilisant deux canaux de communication est la sécurisation de paiement électronique par carte bancaire proposée par les sociétés Visa et Mastercard sous le nom commercial « 3D Secure » ou « Securecode » respectivement. Ce service consiste, après avoir entré ses identifiants de carte bancaire à recevoir sur son téléphone mobile préalablement enregistré par sa banque un message contenant un code secret à usage unique qui doit alors être recopié dans l'écran de saisie de paiement.

Cette solution a pour inconvénient de faire transiter l'ensemble des informations secrètes, dont le code secret à usage unique, par le terminal sur lequel la transaction de paiement est effectuée. Ainsi, un tiers qui intercepte les communications sur internet est capable de jouer et modifier certains paramètres de la transaction sans que l'utilisateur s'en aperçoive.

Le document US2008/0086764 décrit un procédé d'authentification d'un utilisateur lors duquel ledit utilisateur transmet un identifiant sur un premier canal de communication, reçoit un jeton sur ce premier canal, et transmet ledit jeton et un deuxième paramètre sur un deuxième canal de communication. Le document WO2011/138558 expose l'authentification d'un utilisateur à l'aide d'un code d'authorisation saisi d'un terminal de communication portable. Le document EP1840814 expose le déchiffrement d'un mot de passe à usage unique par un téléphone portable à l'aide d'un code QR affiché par un ordinateur.

Le document WO2007072001 décrit par exemple une autre méthode de paiement sans contact utilisant un téléphone mobile comme moyen de paiement sécurisé. Il décrit une authentification dynamique à 2 facteurs utilisant 3 appareils : un terminal d'accès, le téléphone mobile de l'acheteur et un serveur d'authentification. Le procédé consiste principalement en :
- L'utilisateur saisit ses données personnelles d'authentification sur le terminal d'accès qui les envoient au serveur avec les informations liées à la transaction de paiement (le « contexte ») ;
- Le serveur vérifie ses données d'authentification et, si elles sont valides, génère un message avec un identifiant de transaction qu'il envoie au terminal ;
- Le terminal présente l'identifiant de transaction de façon à ce qu'il soit « capturé » par le téléphone mobile ;
- A partir de cet identifiant qui contient des informations cachées, le téléphone mobile le déchiffre et en déduit le contexte de la transaction et les informations d'identification pour les présenter à l'utilisateur afin qu'il les valide ;
- Si l'utilisateur les valide, il entre son code d'authentification dans le terminal qui l'envoie au serveur pour validation ;
- Après vérification de ce code, le serveur valide la transaction et autorise le paiement.

Cette solution a l'inconvénient de se baser sur des techniques cryptographiques, en particulier de stéganographie, qui sont sensées empêcher un tiers de « trafiquer » l'identifiant de transaction. Cependant, si ces techniques cryptographiques sont « cassées », un tiers peut se mettre en coupure sur la liaison entre le terminal et le serveur et recréé des identifiants en fonction de ses besoins. En particulier, cette solution se base sur un logiciel de déchiffrage installé sur le téléphone mobile. Or la sécurité des informations sur ces appareils est loin d'être garantie.

Il serait donc avantageux d'obtenir un procédé d'authentification qui soit robuste à ces attaques sans requérir des techniques cryptographiques difficiles à mettre en oeuvre ou sans nécessiter un renforcement de la sécurité des téléphones mobiles.

Pour résoudre un ou plusieurs des inconvénients cités précédemment, un procédé d'authentification d'une personne, la personne étant préalablement connue par un serveur d'authentification comme titulaire d'un équipement de télécommunication ayant un identifiant unique et comme possesseur d'un code d'accès personnel, comprend :
- réception par le serveur d'une requête d'authentification en provenance d'un terminal via un premier réseau de données ;
- envoi par le serveur d'un code d'identification d'une transaction au terminal par le premier réseau de données ;
- transfert du code d'identification de la transaction du terminal à l'équipement de télécommunication par la personne ;
- réception du code d'identification de la transaction accompagné de l'identifiant unique de l'équipement par le serveur en provenance de l'équipement de télécommunication via un second réseau de données ;
- génération sur le serveur d'un jeton d'authentification à usage unique et envoi de celui-ci à l'équipement de télécommunication via le second réseau de données ; et renvoi du jeton d'authentification à usage unique au serveur par l'équipement de télécommunication via le second réseau de données ; et en parallèle,
- acquisition par le terminal, via une requête d'acquisition, du code d'accès personnel saisi par la personne ; et réception par le serveur du code d'accès personnel en provenance du terminal via le premier réseau de données ;
- authentification de la personne par le serveur si le code d'identification de la transaction, l'identifiant unique, le jeton d'authentification et le code d'accès personnel sont conformes aux éléments détenus par le serveur.

Ainsi, avantageusement, chaque canal de communication transporte des données secrètes qui lui sont propres et l'interception sur un des canaux ne permet pas d'avoir connaissance des données secrètes transitant sur l'autre canal. Cela protège également des attaques liées à des logiciels espions installés dans un des terminaux puisqu'il y a répartition des informations secrètes entre les terminaux.

Des caractéristiques ou des modes de réalisation particuliers, utilisables seuls ou en combinaison, sont :
- il comprend en outre un sous-procédé d'enrôlement de la personne comprenant :
   - réception par le serveur de l'identifiant unique de l'équipement de télécommunication et d'au moins une donnée biographique de la personne en provenance de l'équipement de télécommunication via le second réseau de communication ;
   - envoi d'un mot de passe à usage unique par le serveur à l'équipement de télécommunication par le second réseau de communication et affichage du mot de passe à usage unique par l'équipement de télécommunication ;
   - acquisition sur un second terminal du mot de passe à usage unique par saisie de celui-ci par la personne ;
   - réception du mot de passe à usage unique par le serveur en provenance du second terminal via un troisième réseau de télécommunication ; et
   - création et partage du code d'accès personnel entre la personne et le serveur via le second terminal et le troisième réseau de télécommunication ;
- une donnée biographique confidentielle est transférée au serveur en provenance du second terminal via le troisième réseau de télécommunication après la réception du mot de passe à usage unique par le serveur et avant la création du code d'accès personnel ;
- la donnée biographique confidentielle comprend des données de carte bancaire ;
- le sous-procédé d'enrôlement comprend en outre, après la création et le partage du code d'accès personnel :
   - envoi par le serveur d'un code d'identification lié à l'enrôlement au second terminal par le troisième réseau de données ;
   - transfert du code d'identification du terminal à l'équipement de télécommunication ;
   - réception du code d'identification associé à l'identifiant unique de l'équipement par le serveur en provenance de l'équipement de télécommunication via le second réseau de données ;
- le transfert du code d'identification du terminal à l'équipement de télécommunication est réalisé par affichage d'un pictogramme sur le terminal et acquisition de l'image affichée par un appareil photo de l'équipement de télécommunication ; et/ou
- l'équipement de télécommunication intercepte la communication d'envoi du jeton d'authentification à usage unique et le renvoie automatiquement, sans intervention de la personne en utilisant deux canaux de communication différents.

Dans un deuxième aspect de l'invention, un serveur d'authentification d'une personne comprend :
- une mémoire de stockage d'informations biographiques de la personne, les informations biographiques comprenant au moins un identifiant unique d'un équipement de télécommunication dont la personne est titulaire et un code d'accès personnel ;
- une première interface de communication avec un terminal via un premier réseau de données ;
- une deuxième interface de communication avec l'équipement de télécommunication via un deuxième réseau de données ;
- un générateur de code d'identification d'une transaction adapté pour générer un code de la transaction sur demande du terminal et envoyer le code de la transaction généré au terminal et pour recevoir le code d'identification de la transaction accompagné de l'identifiant unique en provenance de l'équipement de télécommunication;
- un générateur de jeton d'authentification à usage unique adapté pour générer un jeton d'authentification à usage unique et envoyer celui-ci à l'équipement de télécommunication et à le recevoir en retour de l'équipement de télécommunication ;
- un générateur d'application de saisie adaptée pour envoyer au terminal un écran de saisie du code d'accès personnel et réceptionner le code d'accès personnel saisi en provenance du terminal;
- un comparateur du code d'identification de la transaction, de l'identifiant unique, du jeton d'authentification et du code d'accès personnel en provenance du terminal ou de l'équipement de télécommunication avec les éléments équivalents détenus par le serveur, l'authentification de la personne étant réalisée si l'ensemble des comparaisons est positif.

Dans un troisième aspect de l'invention, un système d'authentification comprend un serveur d'authentification comme ci-dessus, un terminal connecté au serveur par un premier réseau de communication et un équipement de télécommunication connecté au serveur par un deuxième réseau de télécommunication, le terminal comprenant en outre une interface homme-machine permettant d'afficher des informations et de saisir un code d'accès personnel et l'équipement de télécommunication comprenant en outre un moyen de saisie d'une information affichée par le terminal et un identifiant unique.

Dans un quatrième aspect de l'invention, un produit programme d'ordinateur comprend des instructions de code de programme pour l'exécution des étapes du procédé ci-dessus lorsque le programme est exécuté sur un serveur d'authentification.

L'invention sera mieux comprise à la lecture de la description qui suit, faite uniquement à titre d'exemple, et en référence aux figures en annexe dans lesquelles :
- la figure 1 est une vue schématique d'un système d'authentification selon un mode de réalisation de l'invention ;
- la figure 2 est un ordinogramme de fonctionnement du système de la figure 1 dans sa phase d'enrôlement, chaque élément du système étant représenté par une colonne ; et
- la figure 3 est un ordinogramme de fonctionnement du système de la figure 1 dans sa phase d'authentification, chaque élément du système étant représenté par une colonne.

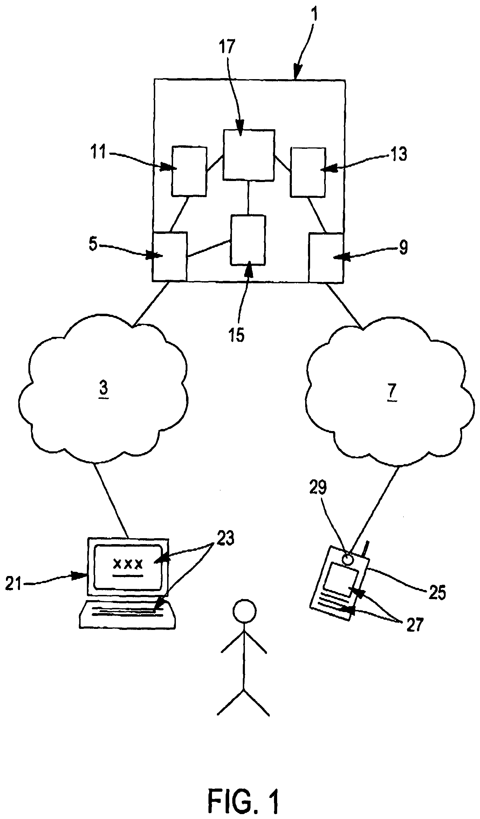

En référence à la figure 1, un système d'authentification comprend un serveur d'authentification 1 connecté à un premier réseau de données 3 via une première interface 5 et connecté à un deuxième réseau de données 7 via une deuxième interface 9.

Le serveur comprend également un générateur 11 de code d'identification adapté pour générer un code d'identification et relié à la première interface 5. Il comprend aussi un générateur 13 de jeton d'authentification à usage unique adapté pour générer un jeton d'authentification à usage unique et connecté à la deuxième interface 7.

Le serveur 1 comprend en outre un générateur 15 d'application de saisie qui est aussi connecté à la première interface 5 et un comparateur 17 connecté à chacun des générateurs.

Le premier réseau de données 3 permet de créer un premier canal de communication entre le serveur 1 et un terminal 21. Ce terminal comprend une interface homme-machine 23 comme, par exemple, un écran et un clavier. Le terminal est par exemple un ordinateur de bureau ou un terminal de paiement électronique.

Le deuxième réseau de données 7 permet de créer un deuxième canal de communication entre le serveur 1 et un équipement de télécommunication 25. L'équipement 25 est par exemple un téléphone mobile. Il comprend une interface homme-machine 27 classique de type clavier-écran et particulièrement un dispositif de prise de photos 29. Le téléphone mobile comprend également, classiquement, des moyens de calcul et de stockage (non représentés) permettant d'exécuter des applications particulières.

Le premier réseau de données 3 et le deuxième réseau de données 7 sont des réseaux distincts. Par exemple, le premier réseau 3 est un réseau internet filaire et le deuxième réseau 7 est un réseau de téléphonie mobile. Au niveau du serveur 1, le gestionnaire de celui-ci peut, par exemple, utiliser deux fournisseurs d'accès différents afin de minimiser la probabilité que les données d'un canal empruntent une partie de l'autre canal.

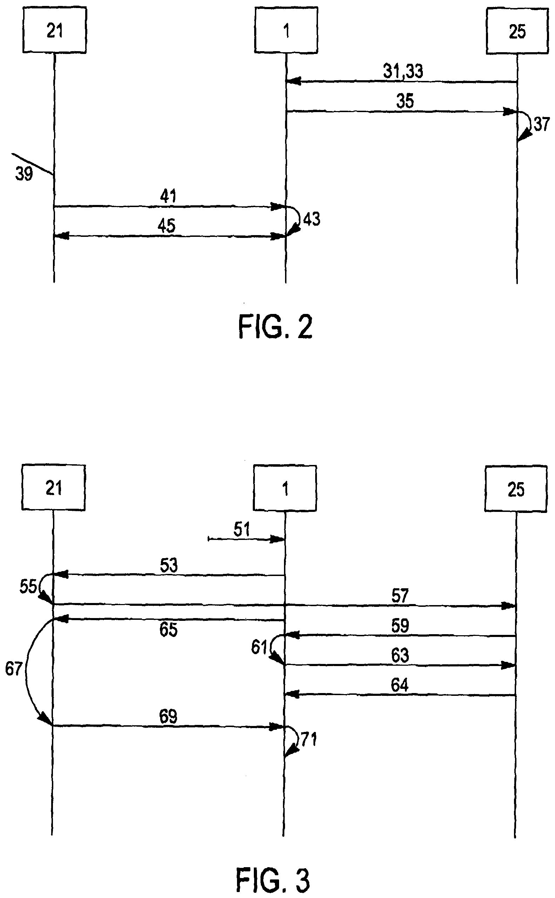

L'utilisation du système va maintenant être décrite en référence aux figures 2 et 3.

Dans un sous-procédé, ou phase, préalable à l'authentification d'un utilisateur, celui-ci doit s'enrôler auprès du serveur d'authentification 1.

Cette phase d'enrôlement va être décrite en référence à la figure 2.

Pour la clarté de l'exposé, il est supposé que le terminal 21 est un terminal de paiement électronique dit « TPE » et que l'équipement de télécommunication 25 est un téléphone mobile sans que cela enlève à la généralité du procédé décrit.

En utilisant son téléphone mobile 25, l'utilisateur se connecte, étape 31, au serveur 1 via le deuxième réseau et fournit, étape 33, à celui-ci des données biographiques permettant de l'identifier, par exemple son nom et prénom, son adresse, etc.

Il fournit également des informations d'identification de son téléphone mobile 25. Ces informations comprennent les informations relatives au terminal (par exemple, le numéro de série de l'appareil, le numéro d'appel et l'IMEI « International Mobile Equipment Identifier » - identifiant international de l'équipement mobile, etc).

En retour, le serveur envoie, étape 35, un mot de passe à usage unique au téléphone mobile 25 que celui-ci affiche, étape 37, sur son écran. Le mot de passe se présente donc à l'utilisateur sous forme d'une chaine alphanumérique, voire seulement numérique.

L'utilisateur saisit, étape 39, sur le TPE 21 le mot de passe à usage unique affiché par le téléphone mobile 25.

Le TPE 21 transmet, étape 41, le mot de passe à usage unique au serveur 1 via le premier réseau 3. A réception, le serveur vérifie, étape 43, que le mot de passe à usage unique est correct, c'est-à-dire identique à celui émis sur le téléphone mobile 25.

Un code d'accès personnel est alors créé, étape 45. Cette création est soit le fait du serveur qui transmet alors le code à l'utilisateur via le TPE 21, soit le fait de l'utilisateur qui le saisit alors sur le TPE pour transmission au serveur.

L'utilisateur est alors connu du serveur et partage avec celui-ci un secret : le code d'accès personnel.

L'utilisateur étant enrôlé, il peut alors utiliser le système d'authentification pour s'authentifier, figure 3.

Pour illustrer le procédé d'authentification, une opération de paiement électronique sécurisée va être décrite.

L'utilisateur utilise son ordinateur personnel pour effectuer un achat sur internet. Pour simplifier la compréhension, on pose comme convention que l'ordinateur personnel est le terminal 21 connecté au premier réseau 3. Cependant, on comprend bien que le terminal 21 utilisé lors de la phase d'enrôlement peut être, et est, le plus souvent, différent du terminal 21 utilisé lors de la phase d'authentification. De même, le premier réseau 3 peut être le même dans les deux phases ou peut être différent. Le point important à souligner est que, durant chaque phase, deux réseaux distincts et deux types de terminaux sont utilisés en simultané, l'un des terminaux étant toujours le téléphone mobile 25 de l'utilisateur qui est enregistré lors de l'enrôlement, c'est-à-dire un équipement qui accompagne quasiment en permanence l'utilisateur.

A la fin du processus d'achat, l'utilisateur est alors amené sur la page de paiement du site marchand. L'utilisateur sélectionne le paiement utilisant le système d'authentification décrit.

L'ensemble des données liées à la transaction, souvent appelé le « contexte », est alors envoyé, étape 51, au serveur d'authentification avec une demande d'authentification.

Le serveur 1 envoie, étape 53, un code d'identification de la transaction à l'ordinateur 21. Ce code est affiché, étape 55, sur l'écran de l'ordinateur sous forme d'un pictogramme. Typiquement, le code est affiché sous forme d'un code barres 2D, mais il peut être également affiché sous forme d'un code barres classique, voire sous forme d'une chaine de caractères alphanumériques.

Le code d'identification affiché est transféré, étape 57, au téléphone mobile 25. Lorsque le code se présente sous forme d'un code barres, ce transfert est réalisé par la prise d'une photo, sinon l'utilisateur saisit la chaine alphanumérique sur le clavier du téléphone.

Le code d'identification est alors envoyé, étape 59, au serveur 1 par le téléphone mobile 25. Il est à noter que ce code d'authentification ne comportant aucun secret, la transformation du code barres en un identifiant alphanumérique peut être réalisée sur le téléphone mobile 25 ou reportée vers le serveur, la transmission se faisant alors sous forme d'un fichier photographique. Le code d'identification est envoyé à l'étape 59 accompagné de l'identifiant du téléphone mobile 25. Cet identifiant doit correspondre à l'identifiant enregistré lors de l'enrôlement afin de permettre au serveur de vérifier que c'est bien le téléphone mobile de l'utilisateur qui est utilisé.

A réception du code d'identification, le serveur génère, étape 61, un jeton d'authentification à usage unique et envoie, étape 63, celui-ci au téléphone mobile 25. Celui-ci renvoie, étape 64, le jeton d'authentification à usage unique au serveur 1. Avantageusement, le canal utilisé pour une des transmissions est différent du canal utilisé pour l'autre transmission. Par exemple, le jeton est reçu via le canal « message court » et renvoyé via le canal DATA TCP/IP sur Wifi ou réseau 3G. Cette étape peut se faire sans intervention de l'utilisateur puisqu'il est possible de programmer un téléphone pour qu'il intercepte un appel avant sonnerie et génère une communication en retour. Ces transmissions peuvent se faire par exemple en utilisant les messages courts SMS. Cette étape permet de valider que c'est bien le téléphone mobile de l'utilisateur qui a envoyé l'identifiant et non pas un tiers se faisant passer pour l'utilisateur.

En parallèle, le serveur programme l'ordinateur 21 pour qu'il affiche, étape 65, une requête d'acquisition du code d'accès personnel.

L'utilisateur saisit alors, étape 67, le code d'accès personnel qui est transmis, étape 69, au serveur 1.

Le serveur 1 authentifie, étape 71, l'utilisateur si le code d'identification, l'identifiant unique, le jeton d'authentification et le code d'accès personnel sont conformes aux éléments détenus par le serveur.

Dans le cadre de la transaction de paiement présentée, le serveur d'authentification déclenche alors le paiement de la transaction.

Dans une première variante de l'enrôlement, lorsque le serveur 1 doit servir à valider des opérations de paiement électronique, il est particulièrement avantageux que l'utilisateur fournisse également au serveur 1 des données sur ses moyens de paiement et, en particulier, les données liées à une carte bancaire. Cette étape est réalisée via le TPE 21, après l'étape 43 de validation du mot de passe à usage unique et, préférentiellement, avant l'étape 45 de création du code d'accès personnel. Le serveur d'authentification peut alors, lors d'une transaction de paiement, utiliser les données de carte bancaire pour réaliser le paiement.

Dans une deuxième variante de l'enrôlement, lorsque le serveur 1 doit authentifier auprès d'un tiers les données biographiques, celles-ci peuvent être vérifiées en utilisant divers moyens connus en tant que tels. Par exemple, la vérification de l'identité peut se faire par la fourniture d'une pièce d'identité comme une carte d'identité, un passeport ou un permis de conduire. Ces données vérifiées peuvent alors servir, par exemple, pour valider les coordonnées de l'acheteur auprès du commerçant. Ces validations peuvent servir d'authentification de l'acheteur, sans saisie du code d'accès personnel, pour des biens matériels dans la mesure où elles garantissent que la livraison du bien achetée se fera à l'adresse « validée » de l'acheteur.

Dans une troisième variante de l'enrôlement, cette phase suit les mêmes étapes que la phase d'authentification avec, en particulier, l'utilisation d'un jeton d'authentification à usage unique qui transite du serveur vers le téléphone et retour.

On comprend que l'ensemble du procédé peut être mis en oeuvre sous forme d'un logiciel exécuté, en particulier, par le serveur 1. Ce logiciel, qui est un ensemble d'instructions pour piloter un ordinateur peut être stocké dans un média permettant son exécution comme un disque dur ou un disque optique. Il peut également être transmis sous forme de fichier téléchargeable.

Cependant, tout ou partie du procédé peut être exécuté sous forme de circuits électroniques câblés pour réaliser les opérations particulières, par exemple sous forme de FPGA (« Field Programmable Gâte Arrays » - réseau de portes programmable sur le terrain). Cela peut être nécessaire pour des raisons de rapidité ou d'augmentation de la sécurité.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

Ainsi, on comprend que les opérations effectuées par l'équipement de télécommunication sont relativement simples, affichage d'un code, prise de photos, etc. et peuvent donc être effectuées par un téléphone mobile classique. Cependant, l'utilisation d'un téléphone programmable permet en utilisant un programme spécialement adapté de simplifier pour l'utilisateur l'ensemble des opérations.

La phase d'enrôlement décrite permet avantageusement de renforcer la sécurité des données fournies au serveur. Elle est cependant indépendante de la phase d'authentification. Ainsi, l'enrôlement pourrait s'effectuer en demandant à l'utilisateur de venir, avec son téléphone mobile, dans un endroit sécurisé, par exemple, une agence bancaire, pour fournir tous les documents nécessaires : les informations sont alors saisies par un agent sur un terminal sécurisé sans exécuter la phase d'enrôlement telle que décrite ci-dessus.

De même, le procédé et le système ont été décrits sans utilisation de techniques de cryptographie. Celles-ci ne sont pas obligatoires mais peuvent être avantageusement utilisées pour renforcer la sécurité de l'ensemble.

Dans les revendications, le mot « comprenant » n'exclue pas d'autres éléments et l'article indéfini « un/une » n'exclue pas une pluralité.

## Revendications

1. Procédé d'authentification d'une personne, la personne étant préalablement connue par un serveur d'authentification comme titulaire d'un équipement de télécommunication ayant un identifiant unique et comme possesseur d'un code d'accès personnel, le procédé comprenant :
• réception (51) par le serveur d'une requête d'authentification en provenance d'un terminal via un premier réseau de données ;
• envoi (53) par le serveur d'un code d'identification d'une transaction au terminal par le premier réseau de données ;
• transfert (57) du code d'identification de la transaction du terminal à l'équipement de télécommunication par la personne ;
• réception (59) du code d'identification de la transaction accompagné de l'identifiant unique de l'équipement par le serveur en provenance de l'équipement de télécommunication via un second réseau de données ;
• génération (61) sur le serveur d'un jeton d'authentification à usage unique et envoi (63) de celui-ci à l'équipement de télécommunication via le second réseau de données ; et renvoi (64) du jeton d'authentification à usage unique au serveur par l'équipement de télécommunication via le second réseau de données ; et en parallèle,
• acquisition (67) par le terminal, via une requête d'acquisition, du code d'accès personnel saisi par la personne ; et réception (69) par le serveur du code d'accès personnel en provenance du terminal via le premier réseau de données ;
• authentification (71) de la personne par le serveur si le code d'identification de la transaction, l'identifiant unique, le jeton d'authentification et le code d'accès personnel sont conformes aux éléments détenus par le serveur.

2. Procédé selon la revendication 1, **caractérisé en ce qu'**il comprend en outre un sous-procédé d'enrôlement de la personne comprenant :
• réception (31, 33) par le serveur de l'identifiant unique de l'équipement de télécommunication et d'au moins une donnée biographique de la personne en provenance de l'équipement de télécommunication via le second réseau de communication ;
• envoi (35) d'un mot de passe à usage unique par le serveur à l'équipement de télécommunication par le second réseau de communication et affichage (37) du mot de passe à usage unique par l'équipement de télécommunication ;
• acquisition (39) sur un second terminal du mot de passe à usage unique par saisie de celui-ci par la personne ;
• réception (41) du mot de passe à usage unique par le serveur en provenance du second terminal via un troisième réseau de télécommunication ;
• création (43) et partage (45) du code d'accès personnel entre la personne et le serveur via le second terminal et le troisième réseau de télécommunication.

3. Procédé selon la revendication 2, **caractérisé en ce qu'**une donnée biographique confidentielle est transférée au serveur en provenance du second terminal via le troisième réseau de télécommunication après la réception du mot de passe à usage unique par le serveur et avant la création du code d'accès personnel.

4. Procédé selon l'une quelconque des revendications 2 à 3, **caractérisé en ce que** le sous-procédé d'enrôlement comprend en outre, après la création et le partage du code d'accès personnel :
• envoi par le serveur d'un code d'identification lié à l'enrôlement au second terminal par le troisième réseau de données ;
• transfert du code d'identification du terminal à l'équipement de télécommunication ;
• réception du code d'identification de la transaction accompagné de l'identifiant unique de l'équipement par le serveur en provenance de l'équipement de télécommunication via le second réseau de données.

5. Procédé selon l'une quelconque des revendications précédentes, **caractérisé en ce que** le transfert du code d'identification du terminal à l'équipement de télécommunication est réalisé par affichage d'un pictogramme sur le terminal et acquisition de l'image affichée par un appareil photo de l'équipement de télécommunication.

6. Procédé selon l'une quelconque des revendications 1 à 4, **caractérisé en ce que** le transfert du code d'identification du terminal à l'équipement de télécommunication est réalisé par affichage d'une chaine de caractères alphanumériques sur le terminal et saisie par l'utilisateur de ladite chaine sur l'équipement de télécommunication

7. Procédé selon l'une quelconque des revendications précédentes, **caractérisé en ce que** l'équipement de télécommunication intercepte la communication d'envoi du jeton d'authentification à usage unique et le renvoie automatiquement, sans intervention de la personne en utilisant deux canaux de communication différents du second réseau de données.

8. Serveur d'authentification d'une personne adapté pour l'exécution des étapes du procédé selon l'une quelconque des revendications 1 à 7, le serveur comprenant :
* une mémoire de stockage d'informations biographiques de la personne, les informations biographiques comprenant au moins un identifiant unique d'un équipement de télécommunication dont la personne est titulaire et un code d'accès personnel ;
• une première interface (5) de communication avec un terminal (21) via un premier réseau de données (3) ;
• une deuxième interface (9) de communication avec l'équipement de télécommunication (25) via un deuxième réseau de données (7) ;
• un générateur (11) de code d'identification d'une transaction adapté pour générer un code d'identification de la transaction sur demande du terminal et envoyer le code d'identification de la transaction généré au terminal et pour recevoir le code d'identification de la transaction accompagné de l'identifiant unique en provenance de l'équipement de télécommunication;
• un générateur (13) de jeton d'authentification à usage unique adapté pour générer un jeton d'authentification à usage unique et envoyer celui-ci à l'équipement de télécommunication et à le recevoir en retour de l'équipement de télécommunication ;
• un générateur (15) d'application de saisie adaptée pour envoyer au terminal un écran de saisie du code d'accès personnel et réceptionner le code d'accès personnel saisi en provenance du terminal;
• un comparateur (17) du code d'identification de la transaction, de l'identifiant unique, du jeton d'authentification et du code d'accès personnel en provenance du terminal ou de l'équipement de télécommunication avec les éléments équivalents détenus par le serveur, i'authentification de la personne étant réalisée si l'ensemble des comparaisons est positif.

9. Système d'authentification comprenant un serveur d'authentification selon la revendication 8, un terminal connecté au serveur par un premier réseau de communication et un équipement de télécommunication connecté au serveur par un deuxième réseau de télécommunication, le terminal comprenant en outre une interface homme-machine permettant d'afficher des informations et de saisir un code d'accès personnel et l'équipement de télécommunication comprenant en outre un moyen de saisie d'une information affichée par le terminal et un identifiant unique.

10. Produit programme d'ordinateur comprenant des instructions de code de programme adapté pour l'exécution des étapes du procédé selon l'une quelconque des revendications 1 à 7 lorsque le programme est exécuté sur un serveur d'authentification.

## Patentansprüche

1. Verfahren zur Authentifizierung einer Person, wobei die Person zuvor von einem Authentifizierungsserver als Inhaber einer Telekommunikationsausrüstung mit einer einzigen Kennung und als Besitzer eines persönlichen Zugangscodes gekannt wurde, wobei das Verfahren umfasst:
• Empfangen (51), durch den Server, einer Authentifizierungsanfrage von einem Endgerät über ein erstes Datennetz;
• Versenden (53), durch den Server, eines Identcodes einer Transaktion an das Endgerät mittels des ersten Datennetzes;
• Übertragen (57) des Identcodes der Transaktion des Endgeräts an die Telekommunikationsausrüstung durch die Person;
• Empfangen (59) des Identcodes der Transaktion, begleitet von der einzigen Kennung der Ausrüstung, durch den Server von der Telekommunikationsausrüstung über ein zweites Datennetz;
• Erzeugen (61), auf dem Server, eines Einmal-Authentifizierungstokens und Senden (63) desselben an die Telekommunikationsausrüstung über das zweite Datennetz; und Zurücksenden (64) des Einmal-Authentifizierungstokens an den Server durch die Telekommunikationsausrüstung über das zweite Datennetz; und parallel,
• Erfassen (67), durch das Endgerät, über eine Erfassungsanforderung, des persönlichen, von der Person eingegebenen Zugangscodes; und Empfangen (69), durch den Server, des persönlichen Zugangscodes vom Endgerät über das erste Datennetz;
• Authentifizieren (71) der Person durch den Server, wenn der Identcode der Transaktion, die einzige Kennung, der Authentifizierungstoken und der persönliche Zugangscode mit den von dem Server besessenen Elementen übereinstimmen.

2. Verfahren nach Anspruch 1, **dadurch gekennzeichnet, dass** es ferner ein Rekrutierungs-Unterverfahren der Person umfasst, umfassend:
• Empfangen (31, 33), durch den Server, der einzigen Kennung der Telekommunikationsausrüstung und mindestens einer biografischen Angabe der Person von der Telekommunikationsausrüstung über das zweite Kommunikationsnetz;
• Senden (35) eines Einmal-Passworts durch den Server an die Telekommunikationsausrüstung mittels des zweiten Kommunikationsnetzes und Anzeigen (37) des Einmal-Passworts durch die Telekommunikationsausrüstung;
• Erfassen (39), auf einem zweiten Endgerät, des Einmal-Passworts durch Eingabe desselben durch die Person;
• Empfangen (41) des Einmal-Passworts durch den Server vom zweiten Endgerät über ein drittes Telekommunikationsnetz;
• Schaffen (43) und Teilen (45) des persönlichen Zugangscodes zwischen der Person und dem Server über das zweite Endgerät und das dritte Telekommunikationsnetz.

3. Verfahren nach Anspruch 2, **dadurch gekennzeichnet, dass** eine vertrauliche biografische Angabe an den Server vom zweiten Endgerät über das dritte Telekommunikationsnetz nach dem Empfangen des Einmal-Passworts durch den Server und vor dem Schaffen des persönlichen Zugangscodes übertragen wird.

4. Verfahren nach einem der Ansprüche 2 bis 3, **dadurch gekennzeichnet, dass** das Rekrutierungs-Unterverfahren ferner, nach dem Schaffen und dem Teilen des persönlichen Zugangscodes, umfasst:
• Senden, durch den Server, eines Identcodes in Verbindung mit der Rekrutierung an das zweite Endgerät mittels des dritten Datennetzes;
• Übertragen des Identcodes des Endgeräts an die Telekommunikationsausrüstung;
• Empfangen des Identcodes der Transaktion, begleitet von der einzigen Kennung der Ausrüstung, durch den Server von der Telekommunikationsausrüstung über das zweite Datennetz.

5. Verfahren nach einem der vorangehenden Ansprüche, **dadurch gekennzeichnet, dass** die Übertragung des Identcodes vom Endgerät an die Telekommunikationsausrüstung durch Anzeige eines Piktogramms auf dem Endgerät und Erfassen des angezeigten Bildes durch einen Fotoapparat der Telekommunikationsausrüstung durchgeführt wird.

6. Verfahren nach einem der Ansprüche 1 bis 4, **dadurch gekennzeichnet, dass** die Übertragung des Identcodes vom Endgerät an die Telekommunikationsausrüstung durch Anzeige einer alphanumerischen Zeichenfolge auf dem Endgerät und Eingabe der Folge durch den Benutzer auf der Telekommunikationsausrüstung durchgeführt wird.

7. Verfahren nach einem der vorangehenden Ansprüche, **dadurch gekennzeichnet, dass** die Telekommunikationsausrüstung die Versandkommunikation des Einmal-Authentifizierungstokens abfängt und ihn automatisch ohne Zutun der Person bei Verwendung von zwei unterschiedlichen Kommunikationskanälen des zweiten Datennetzes zurücksendet.

8. Authentifizierungsserver einer Person, der für die Durchführung der Schritte des Verfahrens nach einem der Ansprüche 1 bis 7 geeignet ist, wobei der Server umfasst:
• einen Speicher biografischer Informationen der Person, wobei die biografischen Informationen mindestens eine einzige Kennung einer Telekommunikationsausrüstung, deren Inhaber die Person ist, und einen persönlichen Zugangscode umfassen;
• eine erste Kommunikationsschnittstelle (5) mit einem Endgerät (21) über ein erstes Datennetz (3);
• eine zweite Kommunikationsschnittstelle (9) mit der Telekommunikationsausrüstung (25) über ein zweites Datennetz (7);
• einen Erzeuger (11) eines Identcodes einer Transaktion, der geeignet ist, einen Identcode der Transaktion auf Anforderung des Endgeräts zu erzeugen und den erzeugten Identcode der Transaktion an das Endgerät zu schicken und den Identcode der Transaktion, begleitet von der einzigen Kennung von der Telekommunikationsausrüstung zu empfangen;
• einen Erzeuger (13) eines Einmal-Authentifizierungstokens, der geeignet ist, einen Einmal-Authentifizierungstoken zu erzeugen und diesen an die Telekommunikationsausrüstung zu senden und ihn zurück von der Telekommunikationsausrüstung zu erhalten;
• einen Eingabeapplikationserzeuger (15), der geeignet ist, an das Endgerät einen Eingabebildschirm des persönlichen Zugangscodes zu senden und den eingegebenen persönlichen Zugangscode vom Endgerät zu empfangen;
• eine Vergleichseinrichtung (17) des Identcodes der Transaktion, der einzigen Kennung, des Authentifizierungstokens und des persönlichen Zugangscodes vom Endgerät oder von der Telekommunikationsausrüstung mit den von dem Server besessenen äquivalenten Elementen, wobei die Authentifizierung der Person durchgeführt wird, wenn alle Vergleiche positiv sind.

9. Authentifizierungssystem, umfassend einen Authentifizierungsserver nach Anspruch 8, ein mit dem Server mittels eines ersten Kommunikationsnetzes verbundenes Endgerät und eine mit dem Server mittels eines zweiten Telekommunikationsnetzes verbundene Telekommunikationsausrüstung, wobei das Endgerät ferner eine Mensch-Maschine-Kommunikationsschnittstelle umfasst, die erlaubt, Informationen anzuzeigen und einen persönlichen Zugangscode einzugeben und wobei die Telekommunikationsausrüstung ferner ein Eingabemittel einer von dem Endgerät angezeigten Information und eine einzige Kennung umfasst.

10. Rechnerprogrammprodukt, umfassend Programmcodebefehle, die für die Durchführung der Schritte des Verfahrens nach einem der Ansprüche 1 bis 7 geeignet sind, wenn das Programm auf einem Authentifizierungsserver ausgeführt wird.

## Claims

1. Person authentication process, the person being previously known by an authentication server as holding telecommunication equipment with a unique identifier and possessing a personnel access code, the process comprising:
• the server receives (51) an authentication request from a terminal through a first data network;
• the server sends (53) a transaction identification code to the terminal through the first data server;
• the person transfers (57) the terminal transaction identification code to the telecommunication equipment;
• the server receives (59) the transaction identification code accompanied by the unique identifier of the equipment from the telecommunication equipment through a second data network;
• a one-time authentication token is generated (61) on the server and this token is sent (63) to the telecommunication equipment through the second data network; and the telecommunication equipment returns (64) the one-time authentication token to the server through the second date network, and in parallel;
• the terminal acquires (67) the personnel access code input by the person, through an acquisition request; and the server receives (69) the personal access code from the terminal through the first data network;
• the server authenticates (71) the person if the transaction identification code, the unique identifier, the authentication token and the personal access code comply with the elements held by the server.

2. Process according to claim 1, **characterised in that** it also comprises a person enrolment sub-process comprising:
• the server receives (31, 33) the unique identifier of the telecommunication equipment through the server and at least one biographic data for the person from the telecommunication equipment through the second communication network;
• the server sends (35) a one-time password to the telecommunication equipment through the second communication network and displays (37) the one-time password through the telecommunication equipment;
• the second terminal acquires (39) the one-time password when the person inputs it;
• the server receives (41) the one-time password from the second terminal through a third telecommunication equipment;
• the personal access code between the person and the server is created (43) and shared (45), through the second terminal and the third telecommunication network.

3. Process according to claim 2, **characterised in that** confidential biographic data is transferred to the server from the second terminal through the third telecommunication network after the server has received the one-time password and before the personal access code is created.

4. Process according to either claim 2 or 3, **characterised in that** the enrolment sub-process also comprises the following, after the personal access code has been created and shared:
• the server sends an authentication code related to enrolment to the second terminal through the third data network;
• the terminal identification code is transferred to the telecommunication equipment;
• the server receives the transaction identification code accompanied by the unique identifier of the equipment from the telecommunication equipment through the second data network.

5. Process according to any one of the preceding claims, **characterised in that** the terminal identification code is transferred to the telecommunication equipment by displaying a pictogram on the terminal and a camera in the telecommunication equipment acquires the displayed image.

6. Process according to any one of claims 1 to 4, **characterised in that** the terminal identification code is transferred to the telecommunication equipment by displaying a string of alphanumeric characters on the terminal and the user inputs said string on the telecommunication equipment.

7. Process according to any one of the preceding claims, **characterised in that** the telecommunication equipment intercepts the communication in which the one-time identification token is sent and automatically forwards it without any action by the person, using two communication channels independent of the second data network.

8. Person authentication server adapted to execute the steps in the process according to any one of claims 1 to 7, the server comprising:
• a memory for storage of biographic information for the person, the biographic information comprising at least one unique identifier of telecommunication equipment held by the person, and a personal access code;
• a first communication interface (5) with a terminal (21) through a first data network (3);
• a second communication interface (9) with telecommunication equipment (25) through a second data network (7);
• a transaction identification code generator (11) adapted to generate a transaction identification code on request by the terminal and to send the generated transaction identification code to the terminal and to receive the transaction identification code accompanied by the single identifier from the telecommunication equipment;
• a one-time authentication token generator (13) adapted to generate a one-time authentication token and to send it to the telecommunication equipment and to receive it in return from the telecommunication equipment;
• an input application generator (15) adapted to send a screen for input of the personal access code to the terminal and to receive the entered personal access code from the terminal;
• a comparator (17) to compare the transaction identification code, the one-time identifier, the authentication token and the personal access code from the terminal or the telecommunication equipment with equivalent elements held by the server, the person authentication being made if all comparisons check.

9. Authentication system comprising an authentication server according to claim 8, a terminal connected to the server through the first communication network and a telecommunication equipment connected to the server through a second telecommunication network, the terminal also comprising a human-machine interface to display information and to input a personal access code and the telecommunication equipment also comprising a means of inputting information displayed by the terminal and a unique identifier.

10. Computer program product comprising program code instructions adapted to execute steps in the process according to any one of claims 1 to 7 when the program is executed on an authentication server.
